# EUROPÄISCHE PATENTANMELDUNG

(11) **EP 4 292 689 A1**
(43) Veröffentlichungstag der Anmeldung: **20.12.2023**
(21) Anmeldenummer: 23178860.5
(22) Anmeldetag: 13.06.2023
(51) Int. Cl.: B01D 46/00, B01D 46/10, B01D 46/52

(54) **FILTEREINSATZ UMFASSEND ZUM EINEN EIN FILTERELEMENT UND ZUM ANDEREN EIN DEN RANDBEREICH ABDECKENDES RANDABDECKELEMENT**

(30) Priorität: 13.06.2022 DE 202022103324 U
(71) Anmelder: TROX GmbH, 47506 Neukirchen-Vluyn (DE)
(72) Erfinder: Schwarz, Paul, 46519 Alpen (DE); Roßkothen, Christine, 47506 Neukirchen-Vluyn (DE); Howe, Karsten, 47506 Neukirchen-Vluyn (DE); Bringsken, Henning, 47447 Moers (DE)
(74) Vertreter: Dr. Stark & Partner Patentanwälte mbB

(57) **Zusammenfassung**

Die Erfindung betrifft einen Filtereinsatz (1) umfassend zum einen ein von einem gasförmigen Medium in Strömungsrichtung (11) gesehen durchströmbares flächiges Filterelement (12) mit einer ersten Fläche (13), einer gegenüberliegenden zweiten Fläche (14) und einem umlaufenden Randbereich (15), und zum anderen ein den Randbereich abdeckendes Randabdeckelement (16), wobei das Randabdeckelement (16) gasdicht an dem Filterelement (12) befestigt ist, **dadurch gekennzeichnet, dass**
entweder
das Randabdeckelement (16) als umlaufender, einteilig ausgebildeter Rahmen ausgebildet ist, wobei vorzugsweise der Rahmen eine erste parallel zu wenigstens einer Fläche (13, 14) ausgerichtete Anlagefläche (18), eine zweite parallel zu wenigstens einer Fläche (13, 14) ausgerichtete Anlagefläche (19), eine orthogonal zu wenigstens einer Fläche (13, 14) ausgerichtete, dem Filterelement (12) zugewandte innere Seitenfläche (20) und eine orthogonal zu wenigstens einer Fläche (13, 14) ausgerichtete, dem Filterelement (12) abgewandte äußere Seitenfläche (21) aufweist, wobei das Randabdeckelement (16) vollständig aus Vollholz oder aus einem Werkstoff auf Vollholzbasis, wie beispielsweise einer Massivholzplatte, einem Brettschichtholz (BSH) oder einem lamellierten Holz, oder aus einem Werkstoff auf Furnierbasis, wie beispielsweise einem Furnierschichtholz (LVL), einem Furnierstreifenholz (PSL) oder einer Wabenplatte, besteht
oder aber
das Randabdeckelement (16) aus zumindest zwei Randabdeckelementabschnitten (17) besteht, wobei jeder Randabdeckelementabschnitt (17) jeweils zwei Enden aufweist, und wobei die aufeinander zuweisenden Enden zweier zusammenwirkender Randabdeckelementabschnitte (17) im an dem Filterelement (12) angebrachten Zustand gasdicht miteinander verbunden sind, wobei vorzugsweise jeder Randabdeckelementabschnitt (17) eine erste parallel zu wenigstens einer Fläche (13, 14) ausgerichtete Anlagefläche (18), eine zweite parallel zu wenigstens einer Fläche (13, 14) ausgerichtete Anlagefläche (19), eine orthogonal zu wenigstens einer Fläche (13, 14) ausgerichtete, dem Filterelement (12) zugewandte innere Seitenfläche (20), eine orthogonal zu wenigstens einer Fläche (13, 14) ausgerichtete, dem Filterelement (12) abgewandte äußere Seitenfläche (21) sowie zwei Stirnflächen (22) aufweist, wobei zumindest ein Randabdeckelementabschnitt (17), vorzugsweise alle Randabdeckelementabschnitte (17), vollständig aus Vollholz und/oder oder aus einem Werkstoff auf Vollholzbasis, wie beispielsweise einer Massivholzplatte, einem Brettschichtholz (BSH) oder einem lamellierten Holz, und/oder aus einem Werkstoff auf Furnierbasis, wie beispielsweise einem Furnierschichtholz (LVL), einem Furnierstreifenholz (PSL) oder einer Wabenplatte, besteht (bestehen).

Ferner betrifft die Erfindung ein System umfassend einen Filtereinsatz (1) sowie ein aus Gehäuseteilen bestehendes Gehäuse (2) zur reversiblen Aufnahme des Filtereinsatzes (1).

## Beschreibung

Die Erfindung betrifft einen Filtereinsatz umfassend zum einen ein von einem gasförmigen Medium in Strömungsrichtung gesehen durchströmbares flächiges Filterelement mit einer ersten Fläche, einer gegenüberliegenden zweiten Fläche und einem umlaufenden Randbereich, und zum anderen ein den Randbereich abdeckendes Randabdeckelement, wobei das Randabdeckelement gasdicht an dem Filterelement befestigt ist.

Bei aus der Praxis bekannten Filtereinsätzen besteht das Randabdeckelement aus verzinktem Stahlblech, aus Edelstahl, aus Aluminium, aus Kunststoff oder aus MDF. Aus verzinktem Stahlblech oder aus Edelstahl bestehende Randabdeckelemente sind wegen des jeweiligen hohen spezifischen Gewichtes von Stahl verhältnismäßig schwer. Dies erschwert insbesondere bei einer Überkopfmontage das Einsetzen und das Entnehmen des Filtereinsatzes. Zudem erfordert ein verzinktes Stahlblech einen separaten Verzinkungsschritt, so dass die Herstellung, wie auch bei Edelstahl, recht kostenaufwendig und auch energieaufwendig ist. Aluminium ist zwar leichter als Stahl; jedoch ist auch dieser Herstellungsprozess recht energieaufwendig. Zudem muss ein Randabdeckelement aus Aluminium noch mit einer Beschichtung, wie Eloxal oder Lack, versehen werden. Bei Kunststoff erweist sich u. a. der verhältnismäßig niedrige Brennpunkt als nachteilig. Bei MDF handelt sich es um eine mitteldichte Faserplatte, die aus einem Holzfaserwerkstoff und Leim besteht. Nach dem Vermischen beider Komponenten erfolgt ein Pressvorgang unter Wärmezufuhr.

MDF weist ein hohes spezifisches Gewicht auf, so dass ein entsprechender Filtereinsatz verhältnismäßig schwer ist. MDF enthält zudem wegen des Leims einen nicht unerheblichen Anteil an Formaldehyd, so dass es während des Einsatzes des Filtereinsatzes zu unerwünschten Ausgasungen kommen kann. Zudem kann MDF aufgrund des hohen Leimanteils auch nur schwer recycelt werden.

Aufgabe der Erfindung ist es, die vorgenannten Nachteile zu vermeiden und einen verbesserten Filtereinsatz anzugeben.

Diese Aufgabe wird dadurch gelöst, dass

| | |
|---|---|
| entweder | das Randabdeckelement als umlaufender, einteilig ausgebildeter Rahmen ausgebildet ist, wobei vorzugsweise der Rahmen eine erste parallel zu wenigstens einer Fläche ausgerichtete Anlagefläche, eine zweite parallel zu wenigstens einer Fläche ausgerichtete Anlagefläche, eine orthogonal zu wenigstens einer Fläche ausgerichtete, dem Filterelement zugewandte innere Seitenfläche und eine orthogonal zu wenigstens einer Fläche ausgerichtete, dem Filterelement abgewandte äußere Seitenfläche aufweist, wobei das Randabdeckelement vollständig aus Vollholz oder aus einem Werkstoff auf Vollholzbasis, wie beispielsweise einer Massivholzplatte, einem Brettschichtholz (BSH) oder einem lamellierten Holz, oder aus einem Werkstoff auf Furnierbasis, wie beispielsweise einem Furnierschichtholz (LVL), einem Furnierstreifenholz (PSL) oder einer Wabenplatte, besteht |
| oder aber | das Randabdeckelement aus zumindest zwei Randabdeckelementabschnitten besteht, wobei jeder Randabdeckelementabschnitt jeweils zwei Enden aufweist, und wobei die aufeinander zuweisenden Enden zweier zusammenwirkender Randabdeckelementabschnitte im an dem Filterelement angebrachten Zustand gasdicht miteinander verbunden sind, wobei |
| | vorzugsweise jeder Randabdeckelementabschnitt eine erste parallel zu wenigstens einer Fläche ausgerichtete Anlagefläche, eine zweite parallel zu wenigstens einer Fläche ausgerichtete Anlagefläche, eine orthogonal zu wenigstens einer Fläche ausgerichtete, dem Filterelement zugewandte innere Seitenfläche, eine orthogonal zu wenigstens einer Fläche ausgerichtete, dem Filterelement abgewandte äußere Seitenfläche sowie zwei Stirnflächen aufweist, wobei zumindest ein Randabdeckelementabschnitt, vorzugsweise alle Randabdeckelementabschnitte, vollständig aus Vollholz und/oder aus einem Werkstoff auf Vollholzbasis, wie beispielsweise einer Massivholzplatte, einem Brettschichtholz (BSH) oder einem lamellierten Holz, und/oder aus einem Werkstoff auf Furnierbasis, wie beispielsweise einem Furnierschichtholz (LVL), einem Furnierstreifenholz (PSL) oder einer Wabenplatte, besteht (bestehen). |

Sofern das Randabdeckelement als umlaufender, einteilig ausgebildeter Rahmen ausgebildet ist, ist der Rahmen geschlossen und umlaufend ausgebildet und ist beispielsweise durch Aussägen aus einer Platte hergestellt worden. Es ist aber auch möglich, dass der umlaufende, einteilig ausgebildete Rahmen aus einer Leiste hergestellt worden ist, deren beide gegenüberliegende Enden nach Biegen zu einem Rahmen verbunden worden sind.

Bei Vollholz handelt es sich um Holz, das an einem Stück aus einem Stamm beispielsweise gesägt und weiterverarbeitet wird. Als Vollholz gelten insoweit Holzstücke, die im Ganzen aus dem Holzstamm gesägt werden. Vollholz besteht insoweit aus einem natürlich gewachsenen, durchgehenden Stück Holz.

Unter einem plattenförmigen Werkstoff auf Vollholzbasis werden beispielsweise Massivholzplatten, Brettschichtholz (BSH) oder lamelliertes Holz verstanden. Wie Vollholz besteht auch Massivholz und damit auch Massivholzplatten vollständig aus echtem Holz. Für Massivholz und damit auch Massivholzplatten werden aus Vollholz bestehende, vorzugsweise gleichgroße, Holzstücke miteinander verleimt, gehobelt und verarbeitet. Brettschichtholz (auch BS-Holz oder BSH genannt) wird oft auch als Leimholz bezeichnet und besteht aus mindestens drei Brettlagen und in gleicher Faserrichtung verleimte Hölzer. Lamelliertes Holz besteht aus einzelnen größeren Holzteilen, die aneinander geleimt sind.

Als Werkstoff auf Furnierbasis werden Werkstoffe bezeichnet, die aus mehreren übereinander verleimten Furnier- oder Brettlagen bestehen. Beispiele für einen Werkstoff auf Furnierbasis sind Furnierschichtholz (LVL = Laminated Veneer Lumber), Furnierstreifenholz (PSL = Parallel Strand Board) oder eine Wabenplatte. Ein Furnierschichtholz besteht in der Regel aus etwa 3 mm starken Schälfurnieren aus einem Nadel- oder aus einem Laubholz. Auch Furnierstreifenholz wird aus einem Schälfurnier hergestellt. Bei der Herstellung wird ein etwa 3 mm bis 7 mm starkes Furnier in schmale, beispielsweise etwa 13 mm breite, und etwa 2 m lange Streifen geschnitten und aufeinander geleimt. Unter einer Wabenplatte wird eine Sandwichplatte mit einer dreischichtigen Verbundkonstruktion verstanden. Zwischen zwei aus Vollholz bestehenden Platten ist ein Wabenkern angeordnet.

Das Randabdeckelement kann vollständig aus nur einer Art von Vollholz oder nur einer Art eines Werkstoffes auf Vollholzbasis, wie beispielsweise einer Massivholzplatte, einem Brettschichtholz (BSH) oder einem lamellierten Holz, oder nur einer Art eines Werkstoffs auf Furnierbasis, wie beispielsweise einem Furnierschichtholz (LVL), einem Furnierstreifenholz (PSL) oder einer Wabenplatte, bestehen. Das Randabdeckelement kann aber auch aus mehreren unterschiedlichen Arten von Vollholz oder von Werkstoffen auf Vollholzbasis oder von Werkstoffen auf Furnierbasis bestehen.

Zumindest ein Randabdeckelementabschnitt kann vollständig aus nur einer Art von Vollholz und/oder nur einer Art eines Werkstoffes auf Vollholzbasis, wie beispielsweise einer Massivholzplatte, einem Brettschichtholz (BSH) oder einem lamellierten Holz, und/oder nur einer Art eines Werkstoffs auf Furnierbasis, wie beispielsweise einem Furnierschichtholz (LVL), einem Furnierstreifenholz (PSL) oder einer Wabenplatte, bestehen. So kann beispielsweise zumindest ein Randabdeckelementabschnitt aus einer Art eines Werkstoffes auf Vollholzbasis und aus einer Art eines Werkstoffs auf Furnierbasis bestehen. Das zumindest eine Randabdeckelementabschnitt kann aber auch aus mehreren unterschiedlichen Arten von Vollholz und/oder aus mehreren unterschiedlichen Arten von Werkstoffen auf Vollholzbasis, wie beispielsweise einer Massivholzplatte, einem Brettschichtholz (BSH) oder einem lamellierten Holz, und/oder aus mehreren unterschiedlichen Arten von Werkstoffen auf Furnierbasis, wie beispielsweise einem Furnierschichtholz (LVL), einem Furnierstreifenholz (PSL) oder einer Wabenplatte, bestehen. So kann beispielsweise zumindest ein Randabdeckelementabschnitt aus mehreren unterschiedlichen Arten von Werkstoffen auf Vollholzbasis und aus mehreren unterschiedlichen Arten von Werkstoffen auf Furnierbasis bestehen.

Das Filterelement kann beispielsweise mittels eines Klebstoffes, wie beispielsweise eines Zweikomponentenpolyurethanklebstoffs, mit dem Randabdeckelement verbunden sein.

Das Filterelement kann aus einer Lage bestehen oder aus mehreren Lagen gebildet sein. Das Filterelement kann auch aus mehreren Teilbereichen gebildet sein. Das Filterelement kann aber auch als Filterpaket ausgebildet sein. Das Filterelement kann beispielsweise plissiertes Filterpapier umfassen oder aus plissiertem Filterpapier bestehen. Ein plissiertes Filterpapier besteht aus ungeordnet liegenden Fasern beispielsweise Glasfasern oder synthetischen Fasern. Je nach Filterklasse unterscheidet sich das Filterpapier in seiner Feinheit. So ist beispielsweise die Filterklasse H14 wesentlich feiner als ein Filterpapier der Klasse ePM1 90 %. Abhängig von der Feinheit kann das Filterpapier verschieden große Partikel, wie beispielsweise Feinstäube oder Schwebstoffe, herausfiltern. Bei einem plissierten Filterpapier wird das Filterpapier ziehharmonikaartig plissiert. Zwischen den Falten befindet sich ein Hotmelt-Abstandhalter (auch Separator), der das Filterpaket stabilisiert und einen gleichmäßigen Faltenabstand, und somit eine gleichmäßige Durchströmung, gewährleistet. Diese Art des Faltens wird auch als Minipleat bezeichnet. Selbstverständlich sind auch andere Arten eines Filterelementes denkbar.

Bei dem Vollholz kann es sich um Weichholz handeln. Unter Weichholz werden alle Holzarten verstanden, die eine Darrdichte von unter 0,55 g/cm³ aufweisen. Unter Weichholz fallen die allermeisten Nadelhölzer und auch verschiedene Laubbäume, wie Pappeln oder Linden. Das Randabdeckelement kann aus nur einer Art von Weichholz bestehen. Das Randabdeckelement kann aber auch aus mehreren unterschiedlichen Arten von Weichholz bestehen. Zumindest ein Randabdeckelementabschnitt kann aus nur einer Art von Weichholz bestehen. Zumindest ein Randabdeckelementabschnitt kann aber auch aus mehreren unterschiedlichen Arten von Weichholz bestehen.

Das den Werkstoff auf Vollholzbasis bildende Holz kann Weichholz sein.

Das den Werkstoff auf Furnierbasis bildende Holz kann Weichholz sein.

Zudem kann es sich bei dem Weichholz um Paulownia handeln. Paulownia wird aus Paulownien gewonnen. Paulownien gehören zu der Familie der Blauglockengewächse (Paulowniaceae). Die Darrdichte von Paulownia liegt bei rund 0,15 g/cm³ bis 0,35 g/cm³. Paulownia ist äußerst schnell wachsend. Es stellt insoweit insbesondere unter CO₂-Gesichtspunkten einen sehr nachhaltigen Werkstoff dar, der zudem leicht beispielsweise auch durch Spanen, zu verarbeiten ist. Die Restfeuchte von Paulownia-Holz ist gering. Paulownia-Holz ist leicht und weist eine niedrigere Dichte als eine MDF-Platte auf. Paulownia-Holz weist zudem einen hohen Flammpunkt auf und ist insoweit schwer entflammbar. Da Paulownia-Holz nicht ausgast, eignet sich Paulownia-Holz insbesondere für die Be- und/oder Entlüftung von Reinräumen, wie beispielsweise Operationsräumen. Entsprechend ausgebildete Filtereinsätze können nach ihrer Verwendung in der Gesamtheit beispielsweise verbrannt werden.

Bei dem Weichholz kann es sich um Balsa handeln. Balsa gehört zur Familie Malvaceae. Die Darrdichte beträgt etwa zwischen 0,04 g/cm³ bis 0,15 g/cm³.

Weiterhin kann der Filtereinsatz eckig, vorzugsweise viereckig, ausgebildet sein, und das Randabdeckelement kann eine eckige, vorzugsweise viereckige, Ausgestaltung aufweisen. Vorzugsweise ist die Fläche des Filterelementes ebenfalls viereckig ausgebildet. Dann weist das Filterelement eine viereckig ausgebildete durchströmte Filterfläche auf.

Das Randabdeckelement kann eine Höhe H aufweisen, die größer als die Höhe h des Filterelementes ist. Bei einer solchen Ausgestaltung kann das Filterelement in Abstand zu beiden Anlagenflächen angeordnet werden, so dass das Filterelement in seiner Einsatzposition nicht mit der Anlagefläche in Kontakt ist.

Sofern das Randabdeckelement aus zumindest zwei Randabdeckelementabschnitten besteht, können sich im an dem Filterelement angebrachten Zustand zwei Randabdeckelementabschnitte lediglich entlang einer Kante berühren. Für die Abdichtung kann ein geeignetes Dichtmittel, wie zum Beispiel eine Dichtpaste oder eine Dichtleiste, vorgesehen sein. Zusätzlich können bei dieser Ausführungsvariante zwei benachbarte Randabdeckelementabschnitte auch durch ein geeignetes Verbindungsmittel, beispielsweise durch ein als Winkel ausgebildetes Verbindungsmittel, miteinander verbunden sein.

Sofern das Randabdeckelement aus zumindest zwei Randabdeckelementabschnitten besteht, können sich im an dem Filterelement angebrachten Zustand zwei Randabdeckelementabschnitte derart berühren, dass der eine Randabdeckelementabschnitt mit seiner Stirnfläche an der dem Filterelement zugewandten inneren Seitenfläche des anderen Randabdeckelementabschnitts anliegt. Bei einer solchen Ausgestaltung berühren sich zwei Randabdeckelementabschnitte mit einer Fläche, die der Größe einer Stirnfläche entspricht. Die Randabdeckelementabschnitte bilden dabei einen umlaufenden und geschlossen ausgebildeten Rahmen, der das Filterelement umfasst.

Sofern das Randabdeckelement aus zumindest zwei Randabdeckelementabschnitten besteht, können zumindest die beiden zusammenwirkenden Enden zweier Randabdeckelementabschnitte jeweils eine Verzahnung aufweisen, wobei die Verzahnungen der beiden zusammenwirkenden Enden so ausgebildet sind, dass im an dem Filterelement angebrachten Zustand die Verzahnungen beider Randabdeckelementabschnitte ineinandergreifen. Die Verzahnung kann beispielsweise als offene Zinkung ausgebildet sein. Es sind auch andere Ausgestaltungen, wie beispielsweise eine Ausbildung als Schwalbenschwanzverbindung denkbar.

Vorteilhafterweise können bei zumindest zwei sich im an dem Filterelement angebrachten Zustand berührende Randabdeckelementabschnitte die beiden zusammenwirkenden Enden dieser beiden Randabdeckelementabschnitte mittels zumindest eines, vorzugsweise als Nagel, als Schraube oder als Gewindestange, ausgebildeten Verbindungsmittels miteinander verbunden sein. Auch andere Ausgestaltungen von Verbindungsmitteln sind möglich.

Weiterhin kann auf zumindest einer der beiden Anlageflächen des Randabdeckelementes ein, vorzugsweise als Dichtband ausgebildetes, Dichtelement vorgesehen sein.

Die Erfindung umfasst ferner ein System umfassend einen Filtereinsatz sowie ein aus, vorzugsweise vier rechtwinklig zueinander angeordneten, Gehäuseteilen bestehendes Gehäuse zur reversiblen Aufnahme des Filtereinsatzes, wobei das Gehäuse einen umlaufenden, vorzugsweise linienförmig ausgebildeten, Anlagebereich aufweist, an dem der Filtereinsatz mit seinem Randbereich im eingesetzten Zustand anliegt, wobei das System weiterhin wenigstens eine Einrichtung aufweist, mittels der der Filtereinsatz, vorzugsweise werkzeuglos, zwischen einer Entnahmeposition und einer Fixierposition verlagerbar ist, wobei bei Verlagerung jeder Einrichtung aus der Entnahmeposition in ihre Fixierposition der Filtereinsatz durch die Einrichtung(en) zunehmend in eine Einsatzposition gegen den Anlagebereich verlagert wird, wobei der Filtereinsatz nach einem der Ansprüche 1 bis 14 ausgebildet ist. Bei dem Randbereich des Filtereinsatzes handelt es sich entweder um die erste parallel zu wenigstens einer Fläche des Filterelementes ausgerichtete Anlagefläche oder um die zweite parallel zu wenigstens einer Fläche des Filterelementes ausgerichtete Anlagefläche.

Vorteilhafterweise kann das System weiterhin einen aus, vorzugsweise vier rechtwinklig zueinander angeordneten, Halterahmenteilen bestehenden Halterahmen umfassen, wobei der Halterahmen im eingesetzten Zustand zwischen dem Filtereinsatz und jeder Einrichtung angeordnet ist und jede Einrichtung auf den Halterahmen wirkt.

Sofern das Randabdeckelement als umlaufender, einteilig ausgebildeter Rahmen ausgebildet ist, kann auf die Anlagefläche und/oder auf die Anlagefläche und/oder auf die innere Seitenfläche und/oder auf die äußere Seitenfläche eine Schicht, vorzugsweise eine als Folie ausgebildete Schicht, aufgebracht sein. Die Schicht kann beispielsweise selbstklebend ausgebildet sein. Andere Arten der Befestigung sind möglich. Sofern die Schicht beispielsweise als, vorzugsweise selbstklebende, Folie ausgebildet ist, dient sie als zusätzlicher Feuchtigkeitsschutz.

Sofern das Randabdeckelement aus zumindest zwei Randabdeckelementabschnitten besteht, kann auf die Anlagefläche und/oder auf die Anlagefläche und/oder auf die innere Seitenfläche und/oder auf die äußere Seitenfläche oder und/oder auf zumindest einer Stirnfläche eine Schicht, vorzugsweise eine als Folie ausgebildete Schicht, aufgebracht sein. Die Schicht kann beispielsweise selbstklebend ausgebildet sein. Andere Arten der Befestigung sind möglich. Sofern die Schicht beispielsweise als, vorzugsweise selbstklebende, Folie ausgebildet ist, dient sie als zusätzlicher Feuchtigkeitsschutz.

Im Folgenden wird ein in der Zeichnung dargestelltes Ausführungsbeispiel der Erfindung erläutert. Es zeigen:
- Fig. 1: einen Schnitt durch ein System umfassend einen Filtereinsatz sowie ein Gehäuse,
- Fig. 2: einen Schnitt durch den Gegenstand nach Fig. 1 in Richtung II-II ohne Frontplatte und eine die Frontplatte fixierende Traverse,
- Fig. 3: eine schräge Draufsicht auf einen erfindungsgemäßen Filtereinsatz,
- Fig. 4: eine Explosionsdarstellung des Gegenstandes nach Fig. 3,
- Fig. 5: einen Schnitt durch den Gegenstand nach Fig. 3 in Richtung V-V,
- Fig. 6: eine Ansicht auf den Schnitt nach Fig. 5 und
- Fig. 7: das Detail "X" aus Fig. 6.

In allen Figuren werden für gleiche bzw. gleichartige Bauteile übereinstimmende Bezugszeichen verwendet.

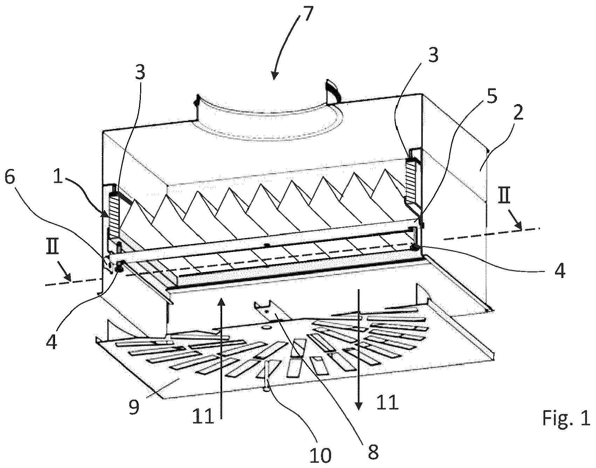

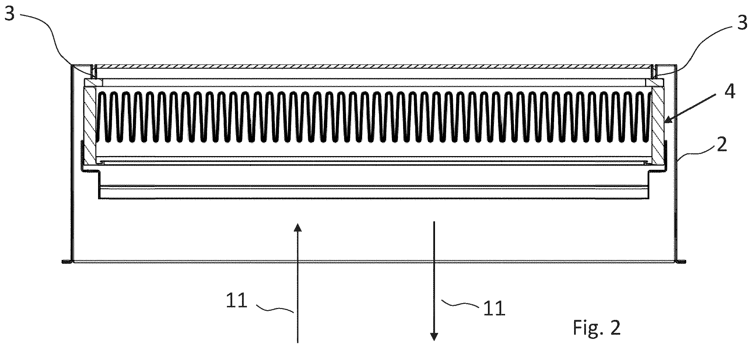

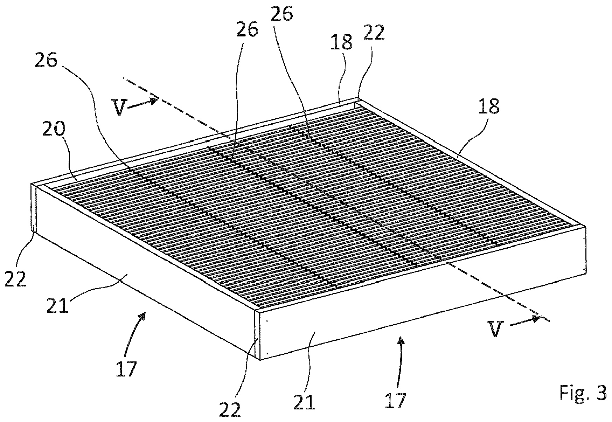

Fig. 1 zeigt ein System umfassend einen Filtereinsatz 1, der insbesondere in den Fig. 3 bis 7 noch näher beschrieben werden wird, sowie ein aus, vorzugsweise vier rechtwinklig zueinander angeordneten, Gehäuseteilen bestehendes Gehäuse 2 zur reversiblen Aufnahme des Filtereinsatzes 1. Das Gehäuse 2 weist auf seiner Innenseite einen umlaufenden Anlagebereich 3 auf, an dem der Filtereinsatz 1 im eingesetzten Zustand anliegt. In dem dargestellten Ausführungsbeispiel wird der Anlagebereich 3 durch einen nach unten abgewinkelten Endbereich eines umlaufenden Blechs, das an der Innenseite des Gehäuses 2 gasdicht befestigt ist, gebildet. Insofern wird der Anlagebereich 3 durch die Stirnkante des nach unten abgewinkelten Endbereichs gebildet und ist insoweit nahezu linienförmig ausgebildet. Das System weist weiterhin eine Einrichtung 4 auf, mittels der der Filtereinsatz 1, vorzugsweise werkzeuglos, zwischen einer Entnahmeposition und einer Fixierposition, die in den Fig. 1 und 2 dargestellt ist, verlagerbar ist. Bei Verlagerung jeder Einrichtung 4 wird der Filtereinsatz 1 durch die Einrichtungen 4 zunehmend aus seiner Entnahmeposition in seine Einsatzposition gegen den Anlagebereich 3 verlagert und dort fixiert.

Wie Fig. 1 zu entnehmen ist, umfasst das System eine Traverse 5. Die beiden Enden der Traverse 5 sind in jeweils eine an der Innenseite gegenüberliegender Gehäuseteile des Gehäuses 2 vorgesehene Haltelaschen 6 einhakbar. Ferner sind in der Traverse 5 zwei Gewindebohrungen vorgesehen. In jede Gewindebohrung ist eine als Schraube ausgebildete Einrichtung 4 verdrehbar angeordnet.

Für die Montage wird der Filtereinsatz 1 zunächst von unten in das Gehäuse 2 eingeführt. Der Filtereinsatz 1 befindet sich dann zunächst in seiner Entnahmeposition. Dann wird die Traverse 5 derart von unten in das Gehäuse 2 eingeführt, dass die beiden Enden der Traverse 5 in die beiden Haltelaschen 6 eingehakt sind. Nunmehr werden die als Schrauben ausgebildeten Einrichtungen 4 verdreht. Durch die Verlagerung der Einrichtungen 4 durch Verdrehen wird zunehmend der Filtereinsatz 1 aus der Entnahmeposition in seine Fixierposition verlagert. In der Fixierposition liegt der Filtereinsatz 1 dichtend an dem umlaufenden, linienförmig ausgebildeten, Anlagebereich 3 an, der eine Zuluft- oder Abluftöffnung 7 in dem Gehäuse 2 umgibt.

In dem dargestellten Ausführungsbeispiel wird, nachdem sich der Filtereinsatz 1 in seiner Fixierposition befindet, noch eine weitere Traverse 8 montiert. Diese Traverse 8 dient zu einer anschließenden Befestigung einer Frontplatte 9 mittels einer Schraube 10.

In den Fig. 3 bis 7 ist der Filtereinsatz 1 in vergrößerter Darstellung gezeigt. Der Filtereinsatz 1 umfasst zum einen ein von einem gasförmigen Medium in Strömungsrichtung 11 gesehen durchströmbares flächiges Filterelement 12 mit einer ersten Fläche 13, einer gegenüberliegenden zweiten Fläche 14 und einem umlaufenden Randbereich 15, und zum anderen ein den Randbereich 15 abdeckendes Randabdeckelement 16. Das Randabdeckelement 16 ist gasdicht an dem Filterelement 12 befestigt und besteht aus vier Randabdeckelementabschnitten 17.

Jeder Randabdeckelementabschnitt 17 weist eine erste parallel zu einer Fläche 13 des Filterelementes 12 ausgerichtete Anlagefläche 18, eine zweite parallel zu einer Fläche 13 des Filterelementes 12 ausgerichtete zweite Anlagefläche 19, eine orthogonal zu einer Fläche 13 des Filterelementes 12 ausgerichtete, dem Filterelement 12 zugewandte innere Seitenfläche 20, eine orthogonal zu einer Fläche 13 des Filterelementes 12, dem Filterelement 1 abgewandte äußere Seitenfläche 21 sowie zwei Stirnflächen 22 auf.

Jeder Randabdeckelementabschnitt 17 weist damit zwei Enden auf, wobei die aufeinander zuweisenden Enden zweier zusammenwirkender Randabdeckelementabschnitte 17 im an dem Filterelement 12 angebrachten Zustand gasdicht miteinander verbunden sind.

Wie insbesondere in den Fig. 3 bis 5 dargestellt ist, berühren sich zwei Randabdeckelementabschnitte 17 derart, dass der eine Randabdeckelementabschnitt 17 mit seiner Stirnfläche 22 an der dem Filterelement 13 zugewandten inneren Seitenfläche 20 des anderen Randabdeckelementabschnitts 17 anliegt. Bei den sich im an dem Filterelement 12 angebrachten Zustand berührenden Randabdeckelementabschnitte 17 sind die beiden zusammenwirkenden Enden jeweils zweier Randabdeckelementabschnitte 17 mittels zweier jeweils als Nagel ausgebildeter Verbindungsmittel 23 miteinander verbunden. Auch andere Ausgestaltungen von Verbindungsmitteln 23 sind möglich.

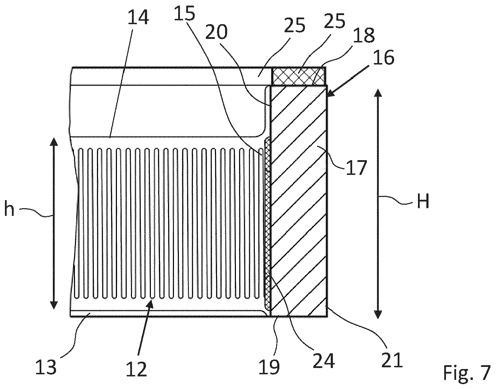

Das Randabdeckelement 16 besteht in dem dargestellten Ausführungsbeispiel aus Vollholz. Bei dem Vollholz handelt es sich beispielsweise um Paulownia-Holz. Das Filterelement 12 ist, wie Fig. 7 zu entnehmen ist, mit einem Klebstoff 24, wie beispielsweise Zweikomponentenpolyurethan, mit den vier inneren Seitenflächen 20 des Randabdeckelementes 16 verbunden.

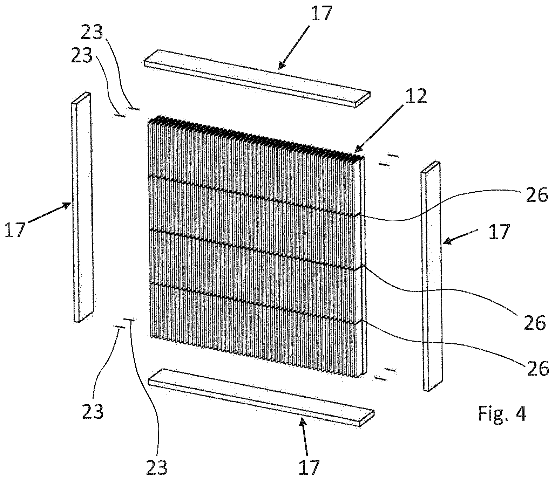

Fig. 4 zeigt eine Explosionsdarstellung des Gegenstandes nach Fig. 3. Das Filterelement 12 besteht aus einer Lage. Es kann aber auch aus mehreren Lagen gebildet sein. Das Filterelement 12 ist in dem dargestellten Ausführungsbeispiel aus vier Teilbereichen gebildet, die an ihren Längskanten verbunden sind. Das Filterelement 2 besteht aus plissiertem Filterpapier. Das plissierte Filterpapier kann beispielsweise die Klasse H14 erfüllen. Das plissierte Filterpapier ist ziehharmonikaartig plissiert.

Wie beispielsweise Fig. 4 zu entnehmen ist, besteht das Filterelement 12 aus einem plissierten Filterpapier, das insoweit ziehharmonikaartig plissiert ist. Zwischen den Falten des Filterelements 12 befinden sich insgesamt vier Reihen an Separatoren 26, die jeweils als Hotmelt-Abstandhalter ausgebildet sind. Jede Reihe an Separatoren 26 stabilisiert das Filterpaket und damit das Filterelement 12. Zudem gewährleistet jede Reihe an Separatoren 26 einen gleichmäßigen Faltenabstand, und somit eine gleichmäßige Durchströmung des Filterelements 12 über seine vollständige Filterfläche.

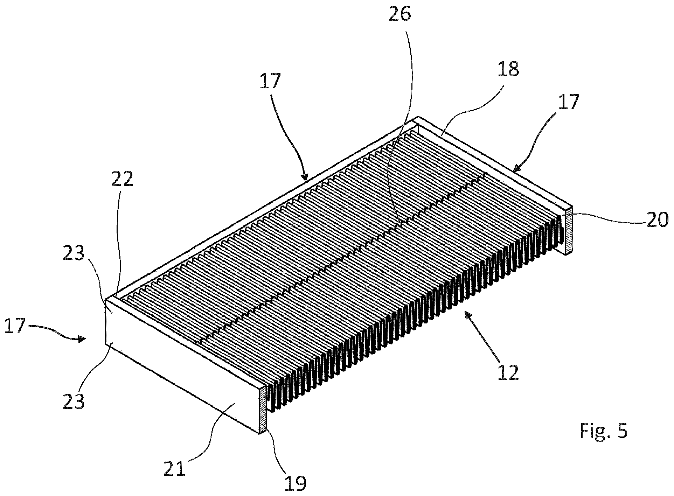

In Fig. 5 ist eine Schnittdarstellung durch den Gegenstand nach Fig. 3 gegeben. Dargestellt ist insofern das aus zwei Teilbereichen gebildete Filterelement 12. Das Filterelement 12 erstreckt sich zwischen den gegenüberliegenden Randabdeckelementabschnitten 17, wobei das Material ziehharmonikaartig plissiert ist.

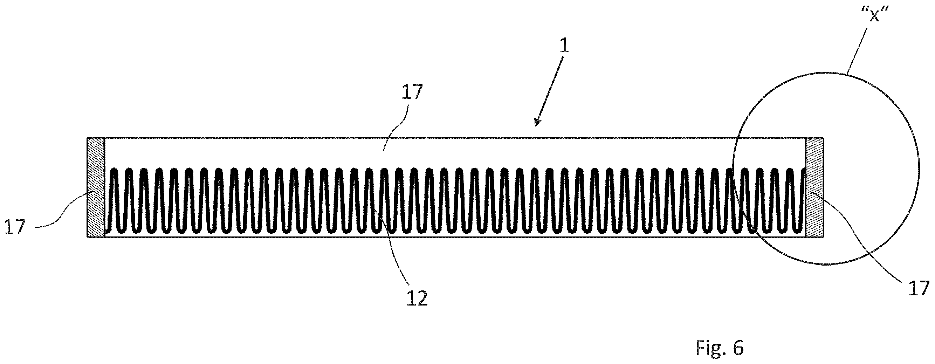

Fig. 6 stellt die Draufsicht auf die Schnittdarstellung nach Fig. 5 dar. Dargestellt ist das Filterelement 12, welches sich zwischen den gegenüberliegenden Randabdeckelementabschnitten 17 erstreckt. Dabei ist das Filterelement 12 auf die Höhe H der Randabdeckelementabschnitte 17 bezogen nicht mittig, sondern mit einem Versatz nach unten angeordnet. Das Randabdeckelement 17 weist eine Höhe H auf, die größer als die Höhe h des Filterelementes 12 ist.

Fig. 7 zeigt das Detail "X" aus Fig. 6. Das Filterelement 12 ist durch den Klebstoff 24 an der inneren Seitenfläche 20 jedes Randabdeckelementabschnittes 17 befestigt. Auf der Anlagefläche 18 des Randabdeckelementabschnittes 17 ist ein Dichtelement 25 vorgesehen, welches als Dichtband ausgebildet ist. Das Dichtelement 25 dichtet in der Einsatzposition den Spalt zwischen dem Randabdeckelement 17 und dem Anlagebereich 3 ab. Da das Randabdeckelement 17 eine Höhe H aufweist, die größer als die Höhe h des Filterelementes 12 ist, ist sichergestellt, dass das Filterelement 12 in seiner Einsatzposition mit keinem anderen Bauteil, wie z. B. dem Anlagebereich 3, in Kontakt ist.

## Patentansprüche

1. Filtereinsatz (1) umfassend zum einen ein von einem gasförmigen Medium in Strömungsrichtung (11) gesehen durchströmbares flächiges Filterelement (12) mit einer ersten Fläche (13), einer gegenüberliegenden zweiten Fläche (14) und einem umlaufenden Randbereich (15), und zum anderen ein den Randbereich abdeckendes Randabdeckelement (16), wobei das Randabdeckelement (16) gasdicht an dem Filterelement (12) befestigt ist, **dadurch gekennzeichnet, dass**
| | |
|---|---|
| entweder | das Randabdeckelement (16) als umlaufender, einteilig ausgebildeter Rahmen ausgebildet ist, wobei vorzugsweise der Rahmen eine erste parallel zu wenigstens einer Fläche (13, 14) ausgerichtete Anlagefläche (18), eine zweite parallel zu wenigstens einer Fläche (13, 14) ausgerichtete Anlagefläche (19), eine orthogonal zu wenigstens einer Fläche (13, 14) ausgerichtete, dem Filterelement (12) zugewandte innere Seitenfläche (20) und eine orthogonal zu wenigstens einer Fläche (13, 14) ausgerichtete, dem Filterelement (12) abgewandte äußere Seitenfläche (21) aufweist, wobei das Randabdeckelement (16) vollständig aus Vollholz oder aus einem Werkstoff auf Vollholzbasis, wie beispielsweise einer Massivholzplatte, einem Brettschichtholz (BSH) oder einem lamellierten Holz, oder aus einem Werkstoff auf Furnierbasis, wie beispielsweise einem Furnierschichtholz (LVL), einem Furnierstreifenholz (PSL) oder einer Wabenplatte, besteht |
| oder aber | das Randabdeckelement (16) aus zumindest zwei Randabdeckelementabschnitten (17) besteht, wobei jeder Randabdeckelementabschnitt (17) jeweils zwei Enden aufweist, und wobei die aufeinander zuweisenden Enden zweier zusammenwirkender Randabdeckelementabschnitte (17) im an dem Filterelement (12) angebrachten Zustand gasdicht miteinander verbunden sind, wobei vorzugsweise jeder Randabdeckelementabschnitt (17) eine erste parallel zu wenigstens einer Fläche (13, 14) ausgerichtete Anlagefläche (18), eine zweite parallel zu wenigstens einer Fläche (13, 14) ausgerichtete Anlagefläche (19), eine orthogonal zu wenigstens einer Fläche (13, 14) ausgerichtete, dem Filterelement (12) zugewandte innere Seitenfläche (20), eine orthogonal zu wenigstens einer Fläche (13, 14) ausgerichtete, dem Filterelement (12) abgewandte äußere Seitenfläche (21) sowie zwei Stirnflächen (22) aufweist, wobei zumindest ein Randabdeckelementabschnitt (17), vorzugsweise alle Randabdeckelementabschnitte (17), vollständig aus Vollholz und/oder oder aus einem Werkstoff auf Vollholzbasis, wie beispielsweise einer Massivholzplatte, einem Brettschichtholz (BSH) oder einem lamellierten Holz, und/oder aus einem Werkstoff auf Furnierbasis, wie beispielsweise einem Furnierschichtholz (LVL), einem Furnierstreifenholz (PSL) oder einer Wabenplatte, besteht (bestehen). |

2. Filtereinsatz (1) nach dem vorhergehenden Anspruch, **dadurch gekennzeichnet, dass** es sich bei dem Vollholz um Weichholz handelt.

3. Filtereinsatz (1) nach einem der vorhergehende Ansprüche, **dadurch gekennzeichnet, dass** das den Werkstoff auf Vollholzbasis bildende Holz Weichholz ist.

4. Filtereinsatz (1) nach einem der vorhergehende Ansprüche, **dadurch gekennzeichnet, dass** das den Werkstoff auf Furnierbasis bildende Holz Weichholz ist.

5. Filtereinsatz (1) nach einem der Ansprüche 2 bis 4, **dadurch gekennzeichnet, dass** es sich bei dem Weichholz um Paulownia handelt.

6. Filtereinsatz (1) nach einem der Ansprüche 2 bis 5, **dadurch gekennzeichnet, dass** es sich bei dem Weichholz um Balsa handelt.

7. Filtereinsatz (1) nach einem der vorhergehenden Ansprüche, **dadurch gekennzeichnet, dass** der Filtereinsatz (1) eckig, vorzugsweise viereckig, ausgebildet ist und dass das Randabdeckelement (16) ein eckige, vorzugsweise viereckige, Ausgestaltung aufweist.

8. Filtereinsatz (1) nach einem der vorhergehenden Ansprüche, **dadurch gekennzeichnet, dass** das Randabdeckelement (16) eine Höhe H aufweist, die größer als die Höhe h des Filterelementes (12) ist.

9. Filtereinsatz (1) nach einem der vorhergehenden Ansprüche, **dadurch gekennzeichnet, dass,** sofern das Randabdeckelement (16) aus zumindest zwei Randabdeckelementabschnitten (17) besteht, sich im an dem Filterelement (12) angebrachten Zustand zwei Randabdeckelementabschnitte (17) lediglich entlang einer Kante berühren.

10. Filtereinsatz (1) nach einem der Ansprüche 1 bis 8, **dadurch gekennzeichnet, dass,** sofern das Randabdeckelement (16) aus zumindest zwei Randabdeckelementabschnitten (17) besteht, sich im an dem Filterelement (12) angebrachten Zustand zwei Randabdeckelementabschnitte (17) derart berühren, dass der eine Randabdeckelementabschnitt (17) mit seiner Stirnfläche (22) an der dem Filterelement (12) zugewandten inneren Seitenfläche (21) des anderen Randabdeckelementabschnitts (17) anliegt.

11. Filtereinsatz (1) nach einem der Ansprüche 1 bis 8, **dadurch gekennzeichnet, dass,** sofern das Randabdeckelement (16) aus zumindest zwei Randabdeckelementabschnitten (17) besteht, zumindest die beiden zusammenwirkenden Enden zweier Randabdeckelementabschnitte (17) jeweils eine Verzahnung aufweisen, wobei die Verzahnungen der beiden zusammenwirkenden Enden so ausgebildet sind, dass im an dem Filterelement (12) angebrachten Zustand die Verzahnungen beider Randabdeckelementabschnitte (17) ineinandergreifen.

12. Filtereinsatz (1) nach einem der Ansprüche 10 oder 11, **dadurch gekennzeichnet, dass** bei zumindest zwei sich im an dem Filterelement (12) angebrachten Zustand berührender Randabdeckelementabschnitte (17) die beiden zusammenwirkenden Enden dieser beiden zwei Randabdeckelementabschnitte (17) mittels zumindest eines, vorzugsweise als Nagel, als Schraube oder als Gewindestange, ausgebildeten Verbindungsmittels (23) miteinander verbunden sind.

13. Filtereinsatz (1) nach einem der vorhergehenden Ansprüche, **dadurch gekennzeichnet, dass** auf zumindest einer der beiden Anlageflächen (18, 19) des Randabdeckelementes (16) ein, vorzugsweise als Dichtband ausgebildetes, Dichtelement (25) vorgesehen ist.

14. Filtereinsatz (1) nach einem der vorhergehenden Ansprüche, **dadurch gekennzeichnet, dass**
- sofern das Randabdeckelement (16) als umlaufender, einteilig ausgebildeter Rahmen ausgebildet ist - auf die Anlagefläche (18) und/oder auf die Anlagefläche (19) und/oder auf die innere Seitenfläche (20) und/oder auf die äußere Seitenfläche (21) eine Schicht, vorzugsweise eine als Folie ausgebildete Schicht, aufgebracht ist
oder
- sofern das Randabdeckelement (16) aus zumindest zwei Randabdeckelementabschnitten (17) besteht - auf die Anlagefläche (18) und/oder auf die Anlagefläche (19) und/oder auf die innere Seitenfläche (20) und/oder auf die äußere Seitenfläche (21) oder und/oder auf zumindest einer Stirnfläche (22) eine Schicht, vorzugsweise eine als Folie ausgebildete Schicht, aufgebracht ist.

15. System umfassend einen Filtereinsatz (1) sowie ein aus, vorzugsweise vier rechtwinklig zueinander angeordneten, Gehäuseteilen bestehendes Gehäuse (2) zur reversiblen Aufnahme des Filtereinsatzes (1), wobei das Gehäuse (2) einen umlaufenden, vorzugsweise linienförmig ausgebildeten, Anlagebereich (3) aufweist, an dem der Filtereinsatz (1) mit seinem Randbereich im eingesetzten Zustand anliegt, wobei das System weiterhin zumindest eine Einrichtung (4) aufweist, mittels der der Filtereinsatz (1), vorzugsweise werkzeuglos, zwischen einer Entnahmeposition und einer Fixierposition verlagerbar ist, wobei bei Verlagerung jeder Einrichtung (4) aus der Entnahmeposition in ihre Fixierposition der Filtereinsatz (1) durch die Einrichtung(en) (4) zunehmend in eine Einsatzposition gegen den Anlagebereich (3) verlagert wird, **dadurch gekennzeichnet, dass** der Filtereinsatz (1) nach einem der vorhergehenden Ansprüche ausgebildet ist.

16. System nach dem vorhergehenden Anspruch, **dadurch gekennzeichnet, dass** das System weiterhin einen aus, vorzugsweise vier rechtwinklig zueinander angeordneten, Halterahmenteilen bestehenden Halterahmen umfasst, wobei der Halterahmen im eingesetzten Zustand zwischen dem Filtereinsatz (1) und jeder Einrichtung (4) angeordnet ist und jede Einrichtung (4) auf den Halterahmen wirkt.
